# EUROPÄISCHE PATENTSCHRIFT

(11) **EP 0 898 064 B1**
(45) Veröffentlichungstag und Bekanntmachung des Hinweises auf die Patenterteilung: **01.10.2003**
(21) Anmeldenummer: 98115175.6
(22) Anmeldetag: 12.08.1998
(51) Int. Cl.: F02D 19/08, F02D 19/02

(54) **Gasmotor**
Gas engine
Moteur à gaz

(30) Priorität: 20.08.1997 DE 29714887 U
(43) Veröffentlichungstag der Anmeldung: 24.02.1999
(73) Patentinhaber: DEUTZ Aktiengesellschaft, 51063 Köln (DE)
(72) Erfinder: Stellwagen, Karl, 67227 Frankenthal (DE)

(56) Entgegenhaltungen:
- DE-A- 1 576 321
- DE-A- 4 137 573
- DE-A- 4 321 893
- US-A- 5 070 850
- US-A- 5 101 799
- PATENT ABSTRACTS OF JAPAN vol. 010, no. 126 (M-477), 10. Mai 1986 & JP 60 252152 A (YANMAR DIESEL KK;OTHERS: 01), 12. Dezember 1985
- PATENT ABSTRACTS OF JAPAN vol. 012, no. 105 (M-681), 6. April 1988 & JP 62 237045 A (YANMAR DIESEL ENGINE CO LTD), 17. Oktober 1987
- PATENT ABSTRACTS OF JAPAN vol. 009, no. 117 (M-381), 22. Mai 1985 & JP 60 003439 A (YANMAR DIESEL KK), 9. Januar 1985
- PATENT ABSTRACTS OF JAPAN vol. 008, no. 224 (M-331), 13. Oktober 1984 & JP 59 105953 A (RIIKUGAADO ENGINEERING KK;OTHERS: 02), 19. Juni 1984

## Beschreibung

Die Erfindung betrifft einen Gasmotor mit einem Motorgasmischer und einem weiteren Gasmischer, die jeweils eine Durchgangsleitung mit einer Gasmischzone aufweisen, in der ein von der dort herrschenden Strömungsgeschwindigkeit abhängiger Unterdruck herrscht.

Aus der gattungsbildenden US 5,101,799 A ist ein Gasmotor bekannt, der einen als Vergaser ausgebildeten Motorgasmischer aufweist, in dem ein LPG-Gas mit Verbrennungsluft gemischt und dem Ansaugsystem des Gasmotors zugeführt wird. In einer weiteren Betriebsart kann das LPG-Gas in einem weiteren Gasmischer mit einem weiteren Gas gemischt werden und dieses Mischgas wird dann der Mischkammer des Vergasers direkt zugeführt.

In der weiterhin bekannten DE 15 76 321 A wird eine Einrichtung zum wahlweisen Betrieb einer Gasmaschine mit verschiedenen Gasen unterschiedlichen Heizwertes beschrieben. Die hier vorgeschlagene Lösung, beim Wechseln des Gases dessen Gasdruck umgekehrt proportional zum Heizwert des jeweiligen Gases zu ändern, setzt die Einhaltung des Mindestheizwertes der verwendeten Gase voraus. Ein Mischen der beiden Gasarten tritt nur kurzzeitig beim Umschalten auf. Aus der DE 41 37 573 A ist ein Gasmotor mit einem Gasmischer bekannt, bei dem der Gasmischer als Venturi-Mischer mit verstellbarem Venturikörper ausgebildet ist.

Der Erfindung liegt die Aufgabe zugrunde, einen Gasmotor zu schaffen, der mit geringem Bauaufwand einen Betrieb mit Schwachgasen gestattet, deren Heizwert unterhalb des für Motorbetrieb erforderliche Mindestheizwerts liegt.

Die Aufgabe wird dadurch gelöst, dass eine Starkgasleitung und eine Schwachgasleitung vorgesehen sind, die in eine gemeinsame Gasleitung münden, wobei die gemeinsame Gasleitung zu dem Motorgasmischer führt und dass die Durchgangsleitung des weiteren Gasmischers als Teil der Schwachgasleitung von Schwachgas und dessen Nebenleitung von Starkgas durchströmbar ist.

Bei Deponien sinkt mit zunehmender Nutzungsdauer der Methangehalt im Brenngas. Bei der Unterschreitung eines für die Verbrennung im Gasmotor erforderlichen Mindestwertes des Methangehaltes von ca. 35 bis 40 % muss heute der Motorbetrieb eingestellt werden. Dadurch ist die Entsorgung des schadstoffreichen Deponiegases und seine Verwertung als Rohstoff nicht mehr möglich. Das anfallende Deponiegas muss in einer speziellen Fackel bei hoher Temperatur verbrannt werden, um den Schadstoffausstoß zu minimieren.

Das gleiche gilt für alle Schwachgase, deren Heizwert unter dem für den Betrieb mit einem Gasmotor erforderlichen Mindestwert liegt.

Eine Steigerung des Heizwerts von Schwachgasen durch Zumischen von Starkgas, wie Erdgas, wird heute nicht ausgeführt, da bekannte Industrie-Gasmischanlagen eine zu große Investition bedeuten würden.

Der weitere Gasmischer gestattet mit geringem Bauaufwand das Zumischen von Starkgas zum Schwachgas, um dessen Heizwert auf einen motorgeeigneten Wert anzuheben. Dadurch ist der Gasmotor im Dauerbetrieb mit zwei Gasen unterschiedlichen Heizwerts gleichzeitig betreibbar. Dadurch besteht die Möglichkeit, den Heizwert des Schwachgases durch Zumischen von Starkgas auf den für motorischen Betrieb erforderlichen Mindestwert anzuheben.

Es ist vorteilhaft, dass der Druck des Starkgases in der Nebenleitung des weiteren Gasmischers in Abhängigkeit vom Druck des Schwachgases am Schwachgaseintritt des weiteren Gasmischers durch einen Gasdruckregler geregelt ist. Dadurch wird unabhängig von der Motorleistung, d. h., unabhängig vom Schwachgasdurchsatz ein konstantes Mischungsverhältnis zwischen Schwach- und Starkgas erreicht, das sich aus dem Querschnittsverhältnis von Durchgangsleitung und Nebenleitung ergibt.

In Weiterbildung ist vorgesehen, daß der Gasdruck des Starkgases in der Nebenleitung des weiteren Gasmischers einstellbar ist. Dadurch können Schwankungen der Schwachgasqualität, wie sie z. B. bei Deponiegas auftreten können, ausgeregelt werden. Außerdem kann der gewünschte Heizwert in weiten Grenzen eingestellt werden.

Vorteilhaft ist auch, daß die Nebenleitung des weiteren Gasmischers über eine Verbindungsleitung mit der Starkgasleitung verbunden ist.

Wenn als Gasdruckregler ein Starkgasdruckregler einer Starkgasregelstrecke in der Starkgasleitung vorgesehen ist und wenn die Verbindungsleitung - in Strömungsrichtung gesehen - hinter dem Starkgasdruckregler von der Starkgasleitung abzweigt, kann der bei Wechselgasmotoren ohnedies vorhandene Starkgasdruckregler kostensparend verwendet werden.

Genauer läßt sich der Starkgasdruck regeln, wenn als Gasdruckregler ein Gasdruckfeinregler vorgesehen ist, der in einer weiteren Verbindungsleitung angeordnet ist, die - in Strömungsrichtung gesehen - vor dem Starkgasdruckregler von der Starkgasleitung abzweigt, zumal wenn der Gasdruckfeinregler einer maximalen Durchsatz von nur ca. 20 % des Schwachgasdurchsatzes aufweist.

Der genau gleichen Vordruck von Schwach- und Starkgas läßt sich dadurch erreichen, daß die Regelorgane des Starkgasdruckreglers bzw. des Gasdruckfeinreglers über eine Impulsleitung mit dem Schwachgaseintritt des weiteren Gasmischers verbunden sind. Auf diese Weise wird der Druck des Schwachgases am Schwachgaseintritt des weiteren Gasmischers gemessen und als Sollwert am Gasdruckregler für das Starkgas aufgeschaltet.

Der erfindungsgemäße Gasmotor kann dadurch optimiert werden, daß der Gasdruck des Starkgases in der Nebenleitung des weiteren Gasmischers durch ein dem Starkgasdruckregler bzw. dem Gasdruckfeinregler nachgeschaltetes, regelbares Drosselventil einstellbar ist. Mit Hilfe des regelbaren Drosselventils können die Heizwertschwankungen des Schwachgases ausgeregelt und somit ein stabiler Motorlauf sichergestellt werden. Außerdem kann der Heizwert des Schwachgases in weiten Grenzen verändert werden.

Ein Vorteil, daß der weitere Gasmischer ein Venturi-Mischer ist, liegt in dessen kleinem Druckverlust und der dadurch bedingten günstigen Größe der Gasregelstrecke.

Weitere Merkmale der Erfindung ergeben sich aus der folgenden Beschreibung und der Zeichnung, in der zwei Ausführungsbeispiele schematisch dargestellt sind.

Es zeigen:
- Fig. 1:: Wechselgasanlage mit zusätzlichem Gasmischer für Stark- und Schwachgas und Gasdruckfeinregler für das beizumischende Starkgas,
- Fig. 2:: Anlage wie Fig. 1, jedoch ohne Gasdruckfeinregler.

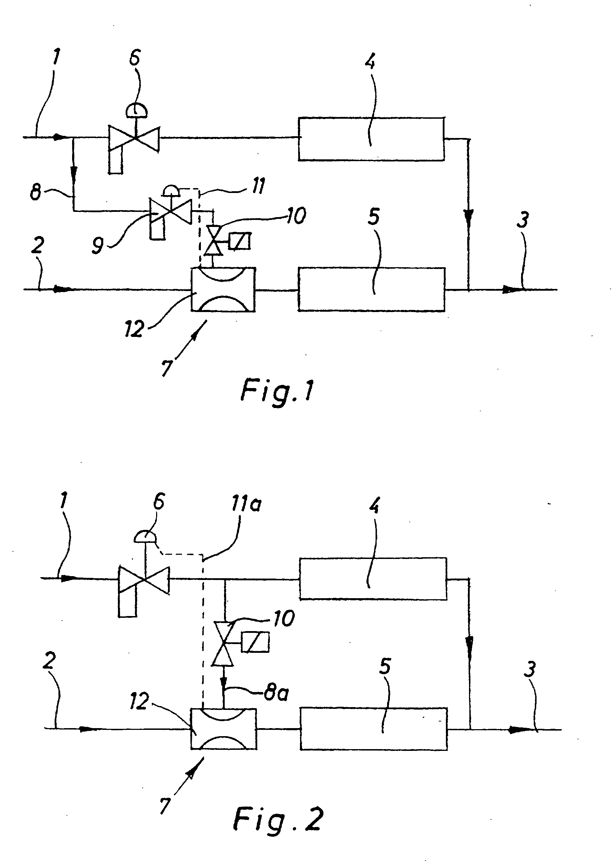

Fig. 1 und 2 zeigen eine Wechselgasanlage mit einer Starkgasleitung 1 und einer Schwachgasleitung 2, die in eine gemeinsame Gasleitung 3 münden. Die Gasleitung 3 führt zu dem Motorgasmischer eines Gasmotors, die beide nicht dargestellt sind.

In der Starkgasleitung 1 ist eine Starkgasregelstrecke 4, in der Schwachgasleitung 2 eine Schwachgasregelstrecke 5 angeordnet. Die Regelstrecken 4, 5 bestehen jeweils aus einem Gasfilter, einem Absperrventil und einem Gasdruckregler. Zusätzlich ist ein Starkgasdruckregler 6 eingebaut, der den Druck des Erdgases auf den zulässigen Eingangsdruck der Starkgasregelstrecke herabsetzt.

In der Schwachgasleitung 2 ist vor der Schwachgasregelstrecke 5 ein weiterer Gasmischer 7 angeordnet, der als Venturi-Mischer ausgebildet ist. In dessen Durchgangsleitung befindet sich eine Beschleunigungsstrecke für die Strömung. In diese Beschleunigungsstrecke mündet eine Nebenleitung, die über eine Verbindungsleitung 8 mit der Starkgasleitung 1 in Strömungsverbindung steht. Durch den in der Beschleunigungsstrecke herrschenden Unterdruck wird Starkgas aus der Nebenleitung in die Durchgangsleitung gesaugt und mischt sich dort mit dem Schwachgas.

Bei der Version von Fig. 1 zweigt die Verbindungsleitung 8 - in Strömungsrichtung gesehen - vor dem Starkgasdruckregler 6, in der Version von Fig. 2 nach demselben von der Starkgasleitung 1 ab.

Bei der Version von Fig. 1 befindet sich in der Verbindungsleitung 8 ein Gasdruckfeinregler 9 und zwischen diesem und dem weiteren Gasmischer 7 ein regelbares Drosselventil 10, während sich in der Verbindungsleitung 8a der Version nach Fig. 2 nur das regelbare Drosselventil 10 befindet.

Der Gasdruckfeinregler 9 und der Starkgasdruckregler 6 stehen mit dem Schwachgaseintritt 12 des weiteren Gasmischers 7 über eine Impulsleitung 11, 11a in Strömungsverbindung.

Die Wechselgasanlage funktioniert folgendermaßen:

Im Wechselgasbetrieb sind die Drosselventile 10 beider Versionen geschlossen. Dadurch ist der weitere Gasmischer 7 bei Schwachund Starkgasbetrieb als Gasmischer außer Betrieb. Im Schwachgasbetrieb wird er von Schwachgas lediglich durchströmt. Die Starkgasleitung 1 bleibt durch das Absperrventil der Starkgasregelstrecke 4 geschlossen.

Bei Starkgasbetrieb ist das Absperrventil in der Schwachgasregelstrecke 5 geschlossen.

Im Wechselgasbetrieb strömt jeweils das Schwachgas aus der Schwachgasleitung 2 und das Starkgas aus der Starkgasleitung 1 in die Gasleitung 3 und von dort über den Motorgasmischer zum Gasmotor.

Im Schwachgasbetrieb mit Starkgaszusatz ist das Absperrventil der Starkgasregelstrecke 4 geschlossen und das Absperrventil der Schwachgasregelstrecke 5 geöffnet.

Der Druck hinter dem Gasdruckfeinregler 9 beziehungsweise dem Starkgasdruckregler 6 wird durch die von den Gasdruckreglern 6, 9 zum Schwachgaseintritt 12 des weiteren Gasmischers 7 führende Impulsleitung 11, 11a auf das dort herrschende Druckniveau eingestellt, so daß Schwach- und Starkgas im weiteren Gasmischer 7 gleichen Druck aufweisen. Das Mischungsverhältnis der beiden Gase hängt lediglich vom Querschnittsverhältnis der Durchgangs- und Nebenleitung ab.

Soll dieses Verhältnis geändert werden, kann der Starkgasdruck in der Nebenleitung durch Verstellen des regelbaren Drosselventils 10 verändert werden. Dadurch kann der Heizwert des Schwachgases in weiten Grenzen variiert werden.

## Patentansprüche

1. Gasmotor mit einem Motorgasmischer und einem weiteren Gasmischer (7), die jeweils eine Durchgangsleitung mit einer Gasmischzone aufweisen, in der ein von der dort herrschenden Strömungsgeschwindigkeit abhängiger Unterdruck herrscht,
**dadurch gekennzeichnet, dass** eine Starkgasleitung (1) und eine Schwachgasleitung (2) vorgesehen sind, die in eine gemeinsame Gasleitung (3) münden, wobei die gemeinsame Gasleitung (3) zu dem Motorgasmischer führt und **dass** die Durchgangsleitung des weiteren Gasmischers (7) als Teil der Schwachgasleitung (2) von Schwachgas und dessen Nebenleitung von Starkgas (6; 9) durchströmbar ist.

2. Gasmotor nach Anspruch 1,
**dadurch gekennzeichnet, dass** der Druck des Starkgases in der Nebenleitung des weiteren Gasmischers (7) in Abhängigkeit vom Druck des Schwachgases am Schwachgaseintritt (12) des weiteren Gasmischers (7) durch einen Gasdruckregler geregelt ist.

3. Gasmotor nach einem der vorangegangenen Ansprüche,
**dadurch gekennzeichnet, dass** der Gasdruck des Starkgases in der Nebenleitung des weiteren Gasmischers (7) einstellbar ist.

4. Gasmotor nach einem der vorangegangenen Ansprüche,
**dadurch gekennzeichnet, dass** die Nebenleitung des weiteren Gasmischers (7) über eine Verbindungsleitung (8; 8a) mit der Starkgasleitung (1) verbunden ist.

5. Gasmotor nach Anspruch 4
**dadurch gekennzeichnet, dass** als Gasdruckregler ein Starkgasdruckregler (6) in der Starkgasleitung (1) vorgesehen ist und **dass** die Verbindungsleitung (8a) - in Strömungsrichtung gesehen - hinter dem Starkgasdruckregler (6) von der Starkgasleitung (1) abzweigt.

6. Gasmotor nach Anspruch 5, **dadurch gekennzeichnet, dass** als Gasdruckregler ein Gasdruckfeinregler (9) vorgesehen ist, der in den Verbindungsleitung (8) angeordnet ist, die - in Strömungsrichtung gesehen - vor dem Starkgasdruckregler (6) von der Starkgasleitung (1) abzweigt.

7. Gasmotor nach Anspruch 6,
**dadurch gekennzeichnet, dass** der Gasdruckfeinregler (9) einen maximalen Durchsatz von ca. 20 % des Schwachgasdurchsatzes aufweist.

8. Gasmotor nach einem der Ansprüche 5 - 7, **dadurch gekennzeichnet, dass** die Regelorgane des Starkgasdruckreglers (6) bzw. des Gasdruckfeinreglers (9) über eine Impulsleitung (11a, 11) mit dem Schwachgaseintritt (12) des weiteren Gasmischers (7) verbunden sind.

9. Gasmotor nach einem der Ansprüche 6 - 8, **dadurch gekennzeichnet, dass** der Gasdruck des Starkgases in der Nebenleitung des weiteren Gasmischers (7) durch ein dem Starkgasdruckregler (6) bzw. dem Gasdruckfeinregler (9) nachgeschaltetes, regelbares Drosselventil (10) einstellbar ist.

10. Gasmotor nach einem der vorangegangenen Ansprüche,
**dadurch gekennzeichnet, dass** der weitere Gasmischer (7) ein Venturi-Mischer ist.

## Claims

1. Gas engine with an engine-gas mixer and with a further gas mixer (7) which each have a passage line with a gas-mixing zone, in which prevails a vacuum dependent on the flow velocity prevailing there, **characterized in that** a rich-gas line (1) and a lean-gas line (2) are provided, which issue into a common gas line (3), the common gas line (3) leading to the engine-gas mixer, and **in that** the passage line of the further gas mixer (7), as part of the lean-gas line (2), has lean gas flowing through it and its secondary line has rich gas (6; 9) flowing through it.

2. Gas engine according to Claim 1, **characterized in that** the pressure of the rich gas in the secondary line of the further gas mixer (7) is regulated as a function of the pressure of the lean gas at the lean-gas inlet (12) of the further gas mixer (7) by means of a gas-pressure regulator.

3. Gas engine according to one of the preceding claims, **characterized in that** the gas pressure of the rich gas in the secondary line of the further gas mixer (7) is adjustable.

4. Gas engine according to one of the preceding claims, **characterized in that** the secondary line of the further gas mixer (7) is connected to the rich-gas line (1) via a connecting line (8; 8a).

5. Gas engine according to Claim 4, **characterized in that** a rich-gas pressure regulator (6) in the rich-gas line (1) is provided as a gas-pressure regulator, and **in that**, as seen in the direction of flow, the connecting line (8a) branches off from the rich-gas line (1) downstream of the rich-gas pressure regulator (6).

6. Gas engine according to Claim 5, **characterized in that** the gas-pressure regulator provided is a gas-pressure precision regulator (9) which is arranged in the connecting line (8) which, as seen in the direction of flow, branches off from the rich-gas line (1) upstream of the rich-gas pressure regulator (6).

7. Gas engine according to Claim 6, **characterized in that** the gas-pressure precision regulator (9) has a maximum throughput of approximately 20% of the lean-gas throughput.

8. Gas engine according to one of Claims 5-7, **characterized in that** the regulating members of the rich-gas pressure regulator (6) or of the gas-pressure precision regulator (9) are connected to the lean-gas inlet (12) of the further gas mixer (7) via a pulse line (11a, 11).

9. Gas engine according to one of Claims 6-8, **characterized in that** the gas pressure of the rich gas in the secondary line of the further gas mixer (7) is adjustable by means of a regulatable throttle valve (10) following the rich-gas pressure regulator (6) or the gas-pressure precision regulator (9).

10. Gas engine according to one of the preceding claims, **characterized in that** the further gas mixer (7) is a Venturi mixer.

## Revendications

1. Moteur à gaz comprenant un mélangeur de gaz de moteur et un autre mélangeur de gaz (7), qui présentent chacun une ligne de passage avec une zone de mélange de gaz dans laquelle règne une dépression dépendant de la vitesse d'écoulement s'y produisant,
**caractérisé en ce que** l'on prévoit une ligne de gaz riche (1) et une ligne de gaz pauvre (2) qui débouchent dans une ligne de gaz commune (3), la ligne de gaz commune (3) conduisant au mélangeur de gaz de moteur et **en ce que** la ligne de passage de l'autre mélangeur de gaz (7) peut être parcourue par du gaz pauvre en tant que partie de la ligne de gaz pauvre (2) et dont la ligne secondaire peut être parcourue par du gaz riche (6 ; 9).

2. Moteur à gaz selon la revendication 1,
**caractérisé en ce que** la pression du gaz riche dans la ligne secondaire de l'autre mélangeur de gaz (7) est régulée par un régulateur de pression de gaz en fonction de la pression du gaz pauvre au niveau de l'entrée de gaz pauvre (12) de l'autre mélangeur de gaz (7).

3. Moteur à gaz selon l'une quelconque des revendications précédentes,
**caractérisé en ce que** la pression de gaz du gaz riche dans la ligne secondaire de l'autre mélangeur de gaz (7) peut être ajustée.

4. Moteur à gaz selon l'une quelconque des revendications précédentes,
**caractérisé en ce que** la ligne secondaire de l'autre mélangeur de gaz (7) est connectée par le biais d'une ligne de raccordement (8 ; 8a) à la ligne de gaz riche (1).

5. Moteur à gaz selon la revendication 4,
**caractérisé en ce que**
l'on prévoit en tant que régulateur de pression de gaz un régulateur de pression de gaz riche (6) dans la ligne de gaz riche (1), et **en ce que** la ligne de raccordement (8a), vue dans la direction de l'écoulement, bifurque de la ligne de gaz riche (1) derrière le régulateur de pression de gaz riche (6).

6. Moteur à gaz selon la revendication 5,
**caractérisé en ce que** l'on prévoit en tant que régulateur de pression de gaz un régulateur de précision de pression de gaz (9) qui est disposé dans la ligne de raccordement (8), qui, vue dans la direction de l'écoulement, bifurque de la ligne de gaz riche (1) devant le régulateur de pression de gaz riche (6).

7. Moteur à gaz selon la revendication 6,
**caractérisé en ce que** le régulateur de précision de pression de gaz (9) présente un débit maximal d'environ 20% du débit de gaz pauvre.

8. Moteur à gaz selon l'une quelconque des revendications 5 à 7,
**caractérisé en ce que** les organes de régulation du régulateur de pression de gaz riche (6) ou du régulateur de précision de pression de gaz (9) sont connectés par le biais d'une ligne d'impulsion (11a, 11) à l'entrée de gaz pauvre (12) de l'autre mélangeur de gaz (7).

9. Moteur à gaz selon l'une quelconque des revendications 6 à 8,
**caractérisé en ce que** la pression de gaz du gaz riche dans la ligne secondaire de l'autre mélangeur de gaz (7) peut être ajustée par une soupape d'étranglement (10) réglable, montée après le régulateur de pression de gaz riche (6) ou le régulateur de précision de pression de gaz (9).

10. Moteur à gaz selon l'une quelconque des revendications précédentes,
**caractérisé en ce que** l'autre mélangeur de gaz (7) est un mélangeur Venturi.
